Europäisches Patentamt

European Patent Office

Office européen des brevets

(11) Veröffentlichungsnummer: **0 111 633**
**A2**

(12) # EUROPÄISCHE PATENTANMELDUNG

(21) Anmeldenummer: 83108890.1

(22) Anmeldetag: 08.09.83

(51) Int. Cl.³: **B 23 Q 3/157**

(30) Priorität: 22.09.82 CH 5606/82

(43) Veröffentlichungstag der Anmeldung:
27.06.84 Patentblatt 84/26

(84) Benannte Vertragsstaaten:
DE FR GB IT SE

(71) Anmelder: A.G. FÜR INDUSTRIELLE ELEKTRONIK AGIE
LOSONE BEI LOCARNO

CH-6616 Losone(CH)

(72) Erfinder: Lodetti, Attilio
3, Via dei Pioppi
CH-6616 Losone(CH)

(72) Erfinder: Blaser, Hansueli
10, Via ai Ciossi
CH-6616 Losone(CH)

(72) Erfinder: Medici, Brenno
54, Via Mezzana
CH-6616 Losone(CH)

(72) Erfinder: Sieg, Arno
Casa Ebe 7, Via ai Saleggi
CH-6600 Locarno(CH)

(74) Vertreter: Punschke, Edgar et al,
c/o EGLI PATENTANWÄLTE Horneggstrasse 4
CH-8008 Zürich(CH)

(54) Automatische Werkzeug-Wechselvorrichtung für Werkzeugmaschinen.

(57) Die Werkzeug-Wechselvorrichtung ist mit Mitteln (41) zur direkten Uebernahme der Werkzeuge (42) durch die Arbeitspinole bzw. Arbeitsspindel (4) versehen. Die Uebernahmemittel besitzen vorzugsweise Schnellspannmittel, welche durch die Arbeitsbewegung der Pinole bzw. Spindel (4) steuerbar sind. Damit entfällt eine separate Uebergabestation für die Werkzeuge aus dem Magazin (5) an die Arbeitspinole bzw. Spindel. Dies hat eine erhebliche Platzeinsparung zur Folge. Das Magazin (5) ist vorzugsweise im wesentlichen um die Baugruppe (3) für die Aufnahme und Führung der Arbeitsspindel bzw. Arbeitspinole (4) angeordnet. Vorzugsweise befindet sich das Magazin (5) im wesentlichen über der projizierten Grundfläche des Maschinenarbeitstisches.

Fig 4

Automatische Werkzeug-Wechselvorrichtung für Werkzeugmaschinen

---

Die Erfindung betrifft eine automatische Werkzeug-Wechselvorrichtung für Werkzeugmaschinen, insbesondere Funkenerodieranlagen gemäss dem Oberbegriff des Patentanspruches
1. Derartige Vorrichtungen dienen zur Speicherung einer
je nach Bedarf gewählten Anzahl von Werkzeugen für die
automatische Abwicklung vorgegebener Bearbeitungsschritte.

Mit der durch die Einführung der numerischen Steuerung gewonnenen Möglichkeit der automatischen Steuerung von
ganzen Bearbeitungs- und Bewegungszyklen haben sich
automatische Werkzeugwechsler bei Werkzeugmaschinen seit
langem durchgesetzt. Ein typisches Beispiel ist in der
US-PS 3 704 510 beschrieben. Die bekannte Vorrichtung
enthält ein Werkzeugmagazin, Uebergabevorrichtungen und
eine zugehörige elektrische Einrichtung. Als Werkzeugmagazin sind stehend oder liegend angeordnete Scheiben mit
Teileinrichtungen ("Revolver") oder Ketten- und Bandmagazine bzw. Regalmagazine bekannt. Für die Uebergabe
der Werkzeuge zwischen dem Magazin und der Uebergabeeinrichtung ist ein bestimmter Uebergabeort vorgesehen. Zu
diesem Zwecke ist ein selbständiger Magazinantrieb vorhanden, der elektrisch, hydraulisch, pneumatisch, mit
Wellen, Getrieben oder wiederum mit Ketten ausgeführt
sein kann. Derartige Werkzeug-Wechseleinrichtungen sind
für die Anwendung bei der abtragenden Bearbeitung von Werkstücken, insbesondere auch bei der funkenerosiven
Bearbeitung, bekannt. Gemäss"Industrie-Anzeiger"101
(1979), No. 55, Seiten 41/42, ist in diesem Zusammenhang ein horizontal angeordnetes Scheibenmagazin bekannt,
das um den Ständer einer Erodierwerkzeugmaschine angeordnet ist. Aus der DE-OS 3 006 650 ist eine andere Ausführung der Funkenerodieranlage beschrieben, die seitlich am Ständer angeordnet ist. Während gemäss"Industrie-
Anzeiger"zur Uebergabe der Elektroden in den Bereich der
den Arbeitshub ausführenden Pinole bzw. Spindel eine
hydraulische Uebergabevorrichtung in Form eines Schiebers
vorgesehen ist, welche eine Translationsbewegung vollführt, ist gemäss der DE-OS 3 006 650 für die Uebergabe
eine seitlich am Ständer angeordnete Verschiebeeinrichtung
vorgesehen, welche eine zusätzliche Verschwenkbewegung
ausführt. Eine weitere handelsübliche Variante solcher
Werkzeugwechsler für Funkenerodieranlagen enthält einen
Schlitten mit einer Halteplatte für Elektrodenaufnahmen,
sowie ein Schienensystem mit Spindelantrieb, auf dem
sich der Schlitten aus seiner vertikalen Ruhelage in die
horizontale Arbeitsposition zur Pinole und wieder zurück
schwenken lässt.

Der Nachteil dieser bekannten automatischen Werkzeug-
wechselvorrichtungen ist zunächst der hohe Bauaufwand, der
notwendig ist für die Uebergabeeinrichtungen, die ausserdem für die Einschwenkbewegung in den Arbeitsbereich an
der Pinole bzw. Spindel relativ viel Raum benötigen. Da
bei der abtragenden Bearbeitung, insbesondere bei der
funkenerosiven Bearbeitung, mit flüssigen, insbesondere mit dielektrischen, Arbeitsmedien gearbeitet wird, welche
Schmiermittel-lösende Eigenschaften besitzen, muss ein
zusätzlicher Aufwand getrieben werden, um die während des
Werkzeugwechsels aus der Arbeitszone verschleppte
Flüssigkeit aufzufangen und ihre Berührung mit den im
allgemeinen geschmierten Lagerungs-, Antriebs- und Uebergabeeinrichtungen sowie ein Abtropfen auf den Werkstattboden zu vermeiden. Für den Wechsel eines benötigten Werkzeuges von der Pinole bzw. Spindel zurück ins Magazin und
der Ladung eines neuen Werkzeuges können unter Umständen
sehr lange Nebenzeiten anfallen. Diese Zeiten können
steuerungstechnisch verkürzt werden, wenn mit einer Uebergabeeinrichtung gearbeitet wird, die einen Doppelgreifer
besitzt, so dass die Vorbereitung des nächstfolgenden
Werkzeuges bereits während der Arbeitsoperation des vorgängigen Werkzeugs durchgeführt werden kann. Auch in
diesem Fall benötigen die Uebergabeeinrichtungen immer
noch Zeiten, die eine nennenswerte Unterbrechung des
Arbeitsablaufs darstellen.

Es sind zwei vereinfachte Versionen bekannt geworden, um
den mit den besprochenen Werkzeugwechselsystemen verbundenen grossen Aufwand etwas zu reduzieren. Bei der
ersten dieser vereinfachten Lösungen wird das gesamte
Elektrodenmagazin unmittelbar an der Pinole bzw. Spindel
montiert. Beispielsweise wird es als Scheibenmagazin
gemäss US-PS 3 363 083, Fig. 11 und 12, jeweils in Bearbeitungslage verdreht. Automatische Antriebsmittel
sind nicht vorgesehen. Ein weiterer Nachteil dieser
ersten vereinfachten Version ist, dass wegen des begrenzten Raumes, der normalerweise an der Pinole zur Verfügung
steht, nur sehr wenige Elektroden gespeichert werden
können. Darüber hinaus benötigt das mit der Arbeitsspinole

bzw. Spindel verbundene Elektrodenmagazin zusätzlichen Bewegungsraum für den Arbeitsvorgang. Ferner muss bei der funkenerosiven Bearbeitung die Pinole im allgemeinen sehr schnelle Bewegungen ausführen können, wobei das zusätzliche Gewicht des Elektrodenmagazins hinderlich ist.

Bei einer zweiten vereinfachten Lösung werden die Werkzeugelektroden nicht an der Pinole bzw. Spindel befestigt, sondern im Arbeitsbereich des Maschinentisches, der das jeweils zu bearbeitende Werkstück trägt. Damit befinden sich die dort gespeicherten Elektroden innerhalb der Verfahrwege des Tisches, oder sie müssen während des Ladevorganges durch eine zusätzlich translatorische oder rotatorische Schiebebewegung in den Tisch-Verstellbereich gebracht werden. Dadurch wird jedoch der Arbeitsraum der jeweiligen Werkzeugmaschine verkleinert, und zwar um den Bereich, in dem die Werkzeugelektroden zwischengelagert werden. Der Wechsel der Elektroden erfordert dann zusätzlich auch die Verlagerung des Tisches mit seinen angetriebenen Achsen unter die momentane Position der Pinole bzw. Spindel, so dass für diese Verschiebebewegung der Spannmittel für das zu bearbeitende Werkstück ein kollisionsfreier Raum freigelassen werden muss. Abgesehen davon, dass damit ein weiteres organisatorisches Erschwernis entsteht, indem die Planung der Maschinenrüstarbeiten auf die Werkzeugwechsel Rücksicht nehmen muss, entsteht durch die allgemein langsamen Tischbewegungen auch ein relativ grosser Nebenzeitverlust, wenn ein Elektrodenwechsel zu erfolgen hat. Da die am Maschinentisch gespeicherten Elektroden notwendigerweise in den Randzonen des Verstellbereiches für den Tisch abgelegt sind, muss für den Wechsel der Elektroden ein sehr grosser Verstellweg ausgeführt werden, wodurch in der Regel auch ein ungünstiger Einfluss auf die Genauigkeit der Bearbeitung entsteht, da beim Entfernen und nachträglichen Annähern über eine sehr grosse Distanz Bewegungsungenauigkeiten unvermeidbar sind.

Der Erfindung liegt die Aufgabe zugrunde, eine vom Aufwand her einfache Werkzeug-Wechselvorrichtung zu schaffen, in erster Linie durch Vermeidung von aufwendigen Werkzeugübergabe-Einrichtungen. Gleichzeitig sollen aber die Nachteile der beiden oben beschriebenen vereinfachten Versionen vermieden werden, indem der Werkzeugwechsel ohne wesentlichen Eingriff in das Raumkonzept und das Bewegungskonzept der Maschine erfolgt. Diese Aufgabe wird durch die im kennzeichnenden Teil des Patentanspruchs 1 definierten Merkmale gelöst.

Der Vorteil dieser Lösung besteht insbesondere darin, dass sie mit bescheidenem Aufwand auskommt und trotzdem entscheidende und überraschende Vorteile bietet, die sonst nur mit beträchtlich höherem Aufwand zu erreichen wären. Separate Uebergabeeinrichtungen zur Uebergabe des jeweils benötigten Werkzeugs an die den Arbeitsvorgang ausführende Pinole oder Spindel sind nicht mehr erforderlich. In vorteilhafter Weise wird der Raum um den Bearbeitungsplatz für das Werkstück von Zusatzaggregaten freigehalten, so dass er übersichtlich und gut zugänglich bleibt, besonders zum Einrichten des Werkstücks. Ferner dient die Lösung der Sicherheit des Bedienungspersonals, da keine überragenden oder vorstehenden Teile vorhanden sind. Schliesslich kann die Vorrichtung über der projizierten Grundfläche des Maschinen-Arbeitstisches angeordnet sein, so dass verschleppte Kühl- oder Arbeitsflüssigkeiten in den eigentlichen Arbeitsbereich der Maschine zurückfallen, ohne Schaden an
Schmierstellen oder am Boden anzurichten.

Die Integration des Werkzeugwechslers in das allgemeine
Steuerprogramm der Maschine ist ohne Einschränkungen
möglich, so dass der Einbau in eine Bearbeitungssequenz
(z.B. in den automatischen Ablauf von Schrupp- und
Schlichtvorgängen in einem Programm) keine Schwierigkeiten bereitet. Die Vorrichtung lässt sich auch in Verbindung mit Stapelmagazinen einsetzen, zum Wechsel der
Elektroden allein, sowie für das Arbeiten mit Werkzeugelektroden in Werkzeugelektrodenhaltern, in denen die
Elektroden für die Bearbeitung voreingestellt sind, oder
die zu ganzen Werkzeugelektrodensätzen auf entsprechenden
Trägerplatten montiert sind.

Im folgenden werden bevorzugte Ausführungsbeispiele der
Erfindung anhand von Zeichnungen näher beschrieben. Es
zeigen:

Fig. 1  die Anordnung der beschriebenen Werkzeug-Wechselvorrichtung an einer Werkzeugmaschine, speziell
        einer Funkenerodier-Senkanlage, in Vorderansicht,

Fig. 2  die Seitenansicht der Vorrichtung gemäss Fig. 1,

Fig. 3  die wesentlichen Teile des Werkzeugwechslers
        in Vorder- und Seitenansicht beim Werkzeugwechsel,
        in Arbeitsbewegung,

Fig. 4  den Werkzeugwechsler gemäss Fig. 3, in Vorder-
        und Seitenansicht,

Fig. 5   ein erstes Ausführungsbeispiel für einen Uebergabehalter von der Werkzeug-Wechselvorrichtung zur
         Pinole bzw. Spindel,

Fig. 6   ein zweites Ausführunsbeispiel für einen Uebergabehalter von der Werkzeug-Wechselvorrichtung zur
         Pinole bzw. Spindel, und

Fig. 7   ein weiteres Ausführungsbeispiel eines Werkzeugwechslers mit Werkzeug-Neubestückungs- und Abwurfstationen.

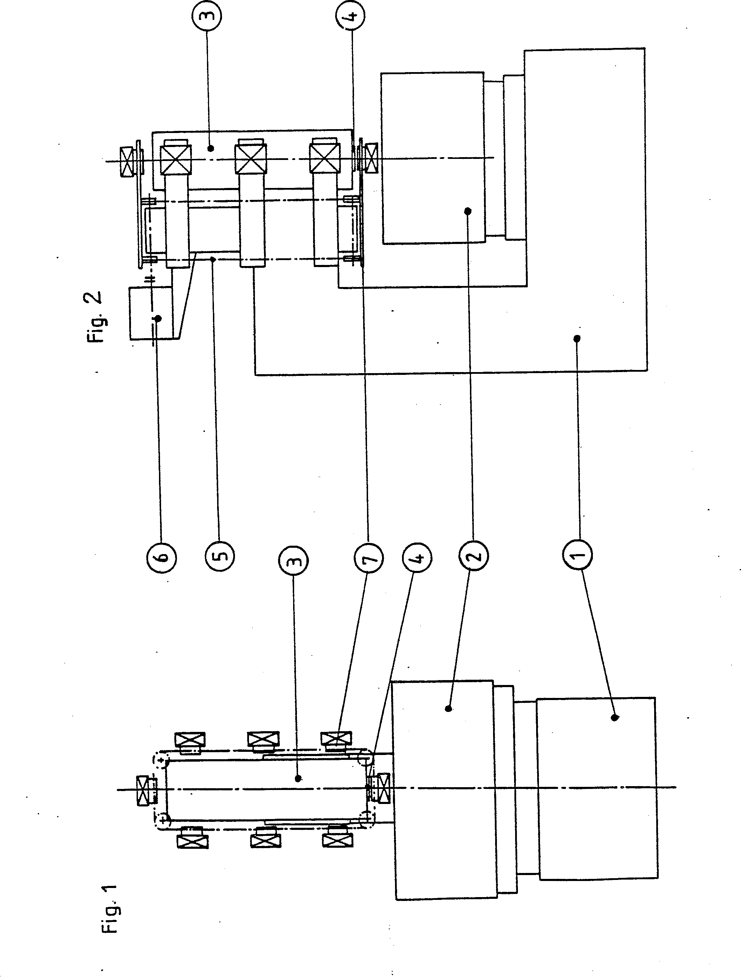

Die in Fig. 1 dargestellte Werkzeugmaschine besteht aus
einer Gestellanordnung 1, auf der ein das Werkstück
tragender Koordinatentisch 2 mit Arbeitsbehälter und
motorischen Antrieben in an sich bekannter Bauart angeordnet ist.  Eine darüber befindliche Baugruppe 3 trägt
die Pinole bzw. die Spindel, die in diesem Beispiel für
eine funkenerosive Senkanlage die eigentliche Arbeitsbewegung ausführt.  Zu diesem Zweck müssen an einer
Pinolennase 4 die der automatischen Bearbeitungssequenz
entsprechenden Werkzeugelektroden montiert werden.  Dies
geschieht durch eine Werkzeugwechseleinrichtung 5, die
bevorzugt als Ketten- oder Bandmagazin ausgeführt ist,
das einen Antrieb 6 besitzt und an dem sich eine Anzahl
von Uebergabehaltern 7 befindet, die entsprechend den
praktischen Bedürfnissen für die Anzahl zu speichernder
Werkzeuge und in Berücksichtigung der bei der gegebenen
Grösse der Werkzeugmaschine vorhandenen Möglichkeiten gewählt werden.

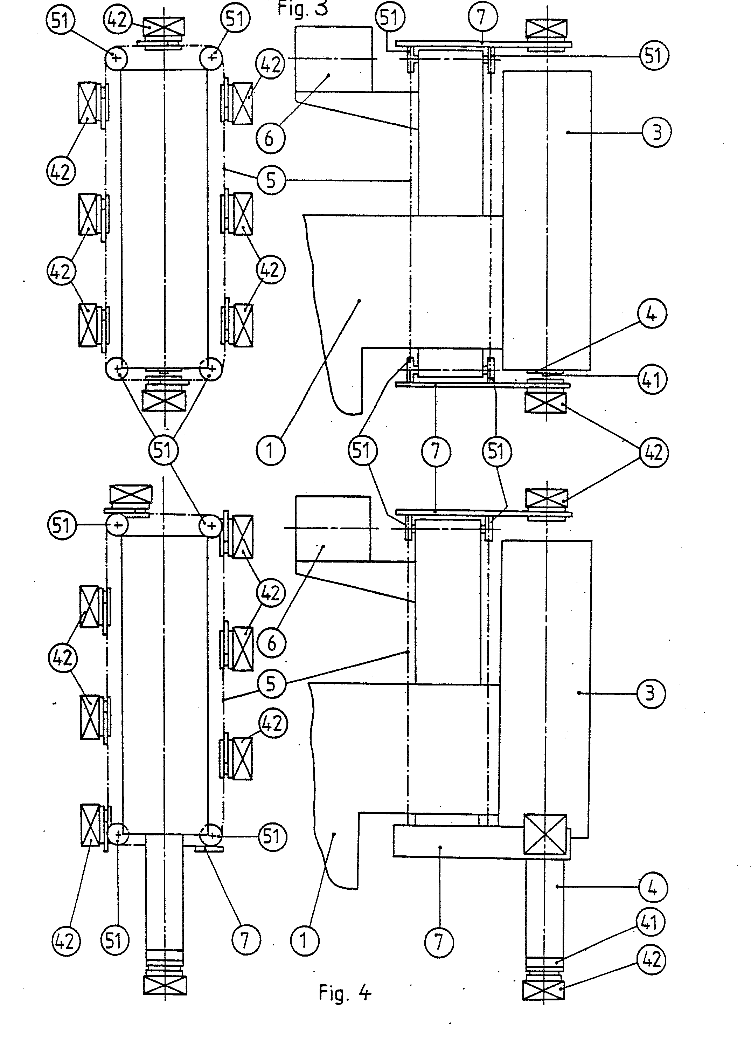

In den Fig. 3 und 4 werden Einzelheiten und Konstruktionsmerkmale des Werkzeugwechslers im einzelnen gezeigt.
Fig. 3 zeigt dabei in Front- und Seitenansicht die Werkzeug-Wechselvorrichtung mit im Beispiel insgesamt acht
Magazinpositionen in einer Stellung, in der die Werkzeugelektrode gewechselt wird.  In Fig. 4 werden die gleichen Ansichten in Ruheposition für den Werkzeugwechsler während
der Bearbeitungstätigkeit der Pinole bzw. Spindel gezeigt. Das Werkstück, der Aufspanntisch und die übrigen
Strukturteile der Werkzeugmaschine sind in den Fig. 3 und
4 weggelassen.

Gemäss Fig. 3 ist an der Pinolennase 4 ein automatisch
ansteuerbares Spannteil 41 angebracht, in welchem eine durch
die Werkzeug-Wechselvorrichtung angebotene Werkzeugelektrode
oder eine im Halter befestigte Werkzeugelektrode oder
Werkzeugsatzelektrode 42 automatisch eingespannt wird.
Solche Spannzubehörteile sind allgemein bekannt und auch
bereits in automatisierter Ausführung vorhanden. Es
können sowohl kegelige oder zylindrische Spanndorne
wie auch doppelprismatische Spanneinrichtungen verwendet
werden. In Verbindung mit dem Spannvorgang wird gleichzeitig gewährleistet, dass die Anschlüsse für eventuelle
Druck- und Saugspülung zur Arbeitszone und für den Fall
der funkenerosiven Bearbeitung auch der Anschluss der
Elektrodenkabel selbsttätig erfolgt, beispielsweise mit
Hilfe eines Flansches mit Mehrfachanschlüssen. Wegen der
besseren Uebersichtlichkeit sind derartige Einrichtungen
in den Figuren nicht dargestellt.

Die verschiedenen Elektroden 42 bzw. Halter mit Elektroden,
die in einem Arbeitszyklus benötigt werden, sind in einer
entsprechenden Anzahl von Uebergabehaltern 7 magaziniert,
die selbst ein Bestandteil der Werkzeug-Wechseleinrichtung
5 bilden. In einer bevorzugten Ausführung kommen dafür
Ketten- oder Bandtriebe in Frage, die um oder in umittelbarer Nähe der Baugruppe 3 mit der Pinolennase 4 angeordnet werden, derart, dass mit Hilfe des Antriebes 6 jeder
vom Steuerprogramm der Maschine aufgerufene Uebergabehalter
in Position vor die Spanneinrichtung 41 an der Pinolennase

4 bewegt werden kann. Als Transportmittel kommen insbesondere Band- oder Ketteneinrichtungen in Frage, die sich mit Hilfe von Umlenkrollen 51 ohne grossen Kraftaufwand um die Baugruppe 3 bewegen lassen.

Die Uebergabehalter 7 werden beispielsweise an den Ketten unmittelbar befestigt. Damit die zu übergebende Werkzeugelektrode bzw. in einem Halter befestigte Werkzeugelektrode 42 mit genügender Genauigkeit und in eindeutiger Orientierung zum Spannen an die Pinolenspanneinrichtung gebracht werden kann, können die Ketten- oder Bandtransportmittel in der Zone der Uebergabestation mit Querführungsmitteln, z.B. mit Führungsschienen, versehen sein. Durch die Wahl der Grösse der Kettenschleife oder Bandschleife und durch die Wahl der Teilung für die Uebergabehalter 7 lässt sich jede beliebige Zahl von Elektroden bzw. Haltern 42 im Magazin unterbringen.

In Fig. 4 sind gegenüber Fig. 3 die magazinierten Elektroden um eine halbe Teilung aus der Uebergabeposition herausgefahren dargestellt, so dass der Uebergabehalter 7, der zuletzt an dem Uebergabeort positioniert war, nach dem Festspannen der Elektrode nunmehr ohne Elektrode ist und der Elektrodenhalter 42 in seitlicher Stellung neben der Pinole angeordnet ist. Das Spannen der Elektrode, bzw. Elektrodenhalterung am Spannteil 41 der Pinolennase 4 erfolgt durch eine kurzhubige Zustellbewegung und automatische Auslösung der Spannmittel. Es ist in Fig. 3 diese Zustellbewegung mit der Distanz zwischen dem Spannmittel 41 und dem Elektrodenhalter 42 deutlich gemacht. Gemäss Fig. 4 ist es nach dem Seitwärtsfahren des Uebergabehalters nunmehr möglich, die Arbeitsbewegung mit der an der Pinolennase 4 befestigten Werkzeugelektrode 42 auszuführen, was an der ausgefahrenen Stellung der Pinole deutlich gemacht ist.

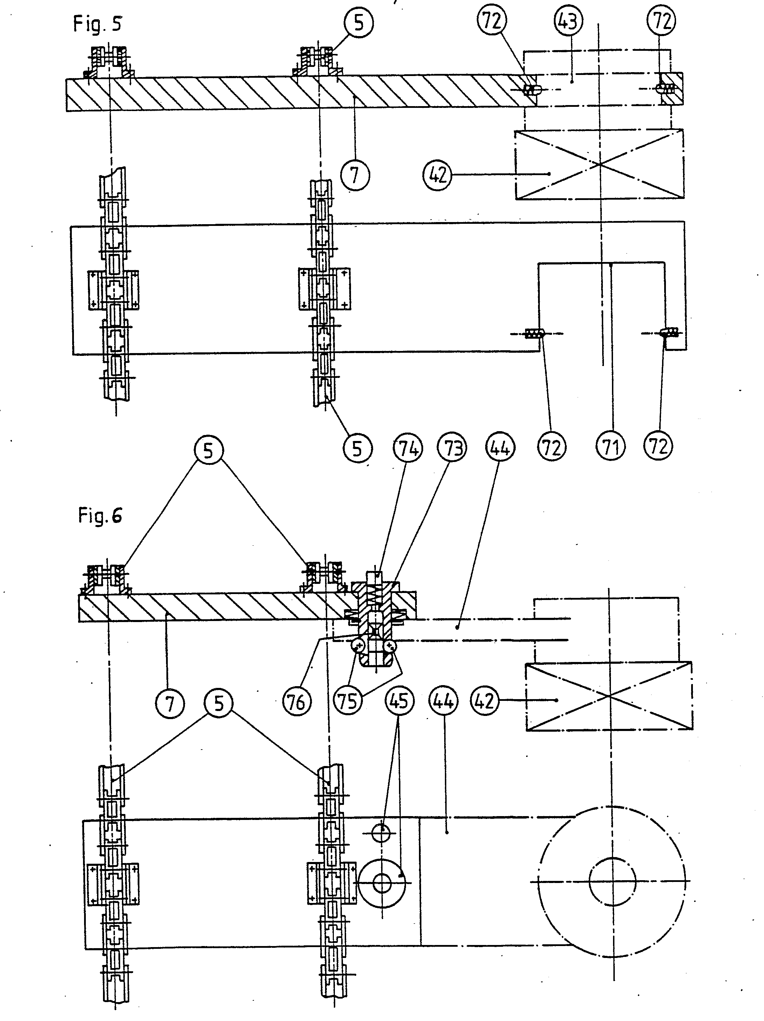

In Fig. 5 wird ein erstes Ausführungsbeispiel für den
Uebergabehalter näher gezeigt. Die an einem Haltemittel
befestigte Elektrode 42 wird über eine z.B. nutförmige Eindrehung 43 an ihrem Umfang in einer gabelförmigen Oeffnung
71 des Uebergabehalters 7 aufgenommen und mit Arretiermitteln, z.B. gefederten Nocken 72, arretiert. Durch die
Bewegung des Uebergabehalters mit Hilfe der Wechseleinrichtung 5 kann nach dem Greifen der Elektrode 42 durch
das Spannmittel an der Pinolennase 4 der Uebergabehalter
ausgerastet werden und nach Beendigung der Arbeit auch
wieder eingerastet werden. Für die Sauberhaltung der
Spannfläche können am Uebergabehalter Staubschutzkappen
angebracht sein.

Fig. 6 zeigt ein zweites Ausführungsbeispiel für einen
Uebergabehalter 7, bei dem statt einer Nut an der Elektrodenhalterung ein Abstandshalter, z.B. ein Hebel 44, befestigt ist. An
diesem Hebel selbst befinden sich zusätzliche Spann- und Zentrieröffnungen 45, über die die ganze Anordnung an dem Uebergabehalter 7 positionsgenau arretiert werden kann. In
der Figur ist dazu beispielhaft ein Zentrierdorn 73 dargestellt, auf den der Hebel 44 durch die Bewegung der
Pinolennase 4 beim Rückzug von der Arbeit zentriert.
Durch einen gefederten Zapfen 74 kann mit Hilfe von Kugelnocken 75 zwischen dem Uebergabehalter 7 und dem Hebel 44
eine formschlüssige Befestigung hergestellt werden. Das
Ausspreizen oder Lösen der Kugelnocken 75 erfolgt dabei
im Beispiel durch eine Spreizkurve, die an den gefederten
Zapfen 74 im Bereich 76 angearbeitet ist. Vorteilhaft
an dieser Ausführung ist, dass nach dem Spannen der Elektrode,
bzw. Elektrodenhalterung 42, an dem Spannteil 41 der Pinolennase 4 keine Verstellbewegung über der Wechseleinrichtung 5 erforderlich ist. Es können in dieser Ausführung darum wesentlich mehr Speicherplätze auf dem Magazin ausgenutzt werden.

In Abwandlung des beschriebenen Ausführungsbeispiels gemäss Fig. 6 können die lösbaren Spannmittel anstelle einer rein mechanischen Auslösesteuerung auch eine steuerbare elektromagnetisch betätigte Spann- bzw. Lösevorrichtung aufweisen.

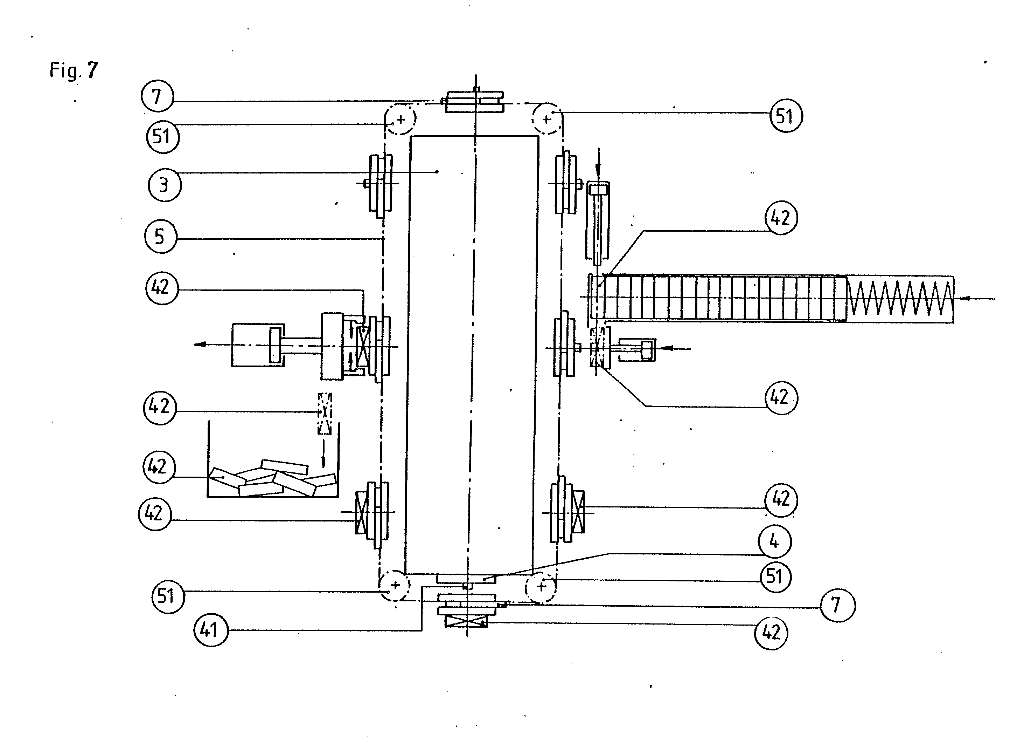

Fig. 7 zeigt ein weiteres Ausführungsbeispiel, bei welchem zum schnellen Laden von Verschleiss-Werkzeugen in das Magazin 5 und zu deren Entladen nach dem Bearbeitungsvorgang eine Werkzeug-Neubestückungsstation 60 und eine Werkzeug-Abwurfstation 61 vorgesehen sind. In der Neubestückungsstation werden fortlaufend frische Werkzeuge der gewünschten Art zum Nachfüllen in das Magazin 5 bereitgehalten. Benutzte Werkzeuge werden in der Abwurfstation 61 aus dem Magazin 5 beispielsweise in einen Sammelbehälter gefüllt. Auf diese Weise wird die Speicherkapazität des Magazins 5 noch einmal erhöht, was insbesondere für den Langzeitvertrieb, ohne ständige Beaufsichtigung der Maschine durch das Personal, wertvoll ist.

Patentansprüche
_____

1.  Automatische Werkzeug-Wechselvorrichtung für Werkzeugmaschinen, insbesondere Funkenerodieranlagen,
    mit einem Werkzeugmagazin und einer Pinole bzw.
    Spindel zur Aufnahme eines für die Bearbeitung
    vorgesehenen Werkzeugs aus dem Werkzeugmagazin und
    mit Uebergabehaltern zur Uebergabe eines für die
    Bearbeitung ausgewählten Werkzeugs vom Werkzeugmagazin an die Pinole bzw. Spindel, dadurch gekennzeichnet, dass die Uebergabehalter (7) selbst
    Bestandteil des Werkzeugmagazins (5)
    bilden und dass an der Pinole bzw. Spindel (4)
    Mittel (41, 43, 72) zur Uebernahme eines Werkzeugs
    (42) aus dem Werkzeugmagazin (5) in einer gemeinsamen
    Uebergabeposition vorgesehen sind.

2.  Wechselvorrichtung nach Anspruch 1, dadurch gekennzeichnet, dass das Wechselmagazin (5) im wesentlichen
    um die Baugruppe (3) für die Pinole bzw. Spindel angeordnet ist.

3.  Wechselvorrichtung nach Anspruch 1, dadurch gekennzeichnet, dass das Werkzeugmagazin (5) im wesentlichen über der projizierten Grundfläche des
    Maschinenarbeitstisches angeordnet ist.

4.  Wechselvorrichtung nach Anspruch 1, dadurch gekennzeichnet, dass das Werkzeugmagazin (5) auf einen
    ketten- oder bandförmigen Träger angeordnet ist.

5. Wechselvorrichtung nach Anspruch 1, dadurch gekennzeichnet, dass die Uebergabehalter (7) gabelförmige Oeffnungen (71) aufweisen, welche durch Bewegung des Werkzeugmagazins (5) am Werkzeug (42) rastbar sind.

6. Wechselvorrichtung nach Anspruch 1, dadurch gekennzeichnet, dass die Uebergabehalter (7) mit lösbaren Spannmitteln (73, 74, 75, 76) versehen sind, zur steuerbaren Befestigung eines am Werkzeug (42) angebrachten Abstandshalters (44).

7. Wechselvorrichtung nach Anspruch 6, dadurch gekennzeichnet, dass die lösbaren Spannmittel (73, 74, 75, 76) mit Stellmitteln (76) versehen sind, zum Ausspreizen der Spannmittel (74, 75), gesteuert durch die Arbeitsbewegung der Pinole oder Spindel (4).

8. Wechselvorrichtung nach Anspruch 6, dadurch gekennzeichnet, dass die lösbaren Spannmittel (73, 74, 75, 76) mit Stellmitteln zum elektromagnetisch gesteuerten Spannen bzw. Lösen der Spannmittel (74, 75) versehen sind.

9. Wechselvorrichtung nach Anspruch 1, gekennzeichnet durch eine am Magazin (5) angeordnete Werkzeug-Neubestückungsstation (60) und eine Werkzeug-Abwurfstation (61).

Fig. 1

Fig. 2

0111633

Fig. 3

Fig. 4

0111633

Fig. 5

Fig. 6

Fig. 7

7
51
3
5
42
42
42
42
51
41

51
42
42
4
51
7
42

- 4/4 -

0111633